# EUROPÄISCHE PATENTSCHRIFT

(11) **EP 0 984 195 B1**
(45) Veröffentlichungstag und Bekanntmachung des Hinweises auf die Patenterteilung: **19.01.2005**
(21) Anmeldenummer: 99113117.8
(22) Anmeldetag: 07.07.1999
(51) Int. Cl.: F16F 15/131, F16F 15/134

(54) **Anordnung eines geteilten Schwungrades**
Arrangement of a split flywheel
Agencement d'un volant divisé

(30) Priorität: 29.08.1998 DE 19839528
(43) Veröffentlichungstag der Anmeldung: 08.03.2000
(73) Patentinhaber: DaimlerChrysler AG, 70567 Stuttgart (DE)
(72) Erfinder: Tscheplak, Ernst, 71384 Weinstadt (DE); Wörner, Günter, 71394 Kernen (DE)

(56) Entgegenhaltungen:
- DE-A- 3 430 457
- DE-A- 3 629 225
- DE-A- 3 823 384
- DE-C- 3 505 069
- FR-A- 2 675 872
- US-A- 4 782 933
- US-A- 5 367 921

## Beschreibung

Die Erfindung betrifft eine Anordnung eines geteilten Schwungrad zur Verringerung von motorseitig erregten Schwingungen eines Antriebsstanges gemäß dem Oberbegriff von Anspruch 1.

Ein geteiltes Schwungrad dieser Art ist aus der DE 35 45 857 C1 bekannt. Weitere Schwungräder dieser Art sind aus den DE 34 30 457 A1, DE 35 05 069 C1 und DE 37 43 801 A1 bekannt. Dokument FR-A-2 675 872 zeigt die Merkmale des Oberbegriffs von Anspruch 1.

Die schwingungstechnische Grundfunktion der geteilten Schwungräder, z.B.Zweimassenschwungräder, basiert auf der Tiefpaßwirkung. Dies bedeutet, daß beim Starten eines Fahrzeuges das Schwungrad eine Resonanz durchläuft, welche ungefähr bei 10 Hz liegt, um oberhalb der Leerlaufdrehzahl des Motors die von ihm erzeugten Drehschwingungen vom Antriebsstrang abzukoppeln. Die Resonanzfrequenz des Schwungrades und somit der kritische Drehzahlbereich liegt unterhalb der Motor-Leerlaufdrehzahl und damit in dem Anlaufdrehzahlbereich des Motors. Der oberhalb der Resonanzfrequenz liegende Drehzahlbereich wird als "überkritischer Bereich" bezeichnet. Wenn die Resonanzfrequenz des Schwungrades im Bereich oberhalb der Leerlaufdrehzahl des Motors liegen würde, dann würden im Antriebsstrang störende Schwingungen während des Fahrbetriebes des Fahrzeuges auftreten, wenn die Motordrehzahl den Resonanzbereich des Schwungrades durchläuft.

Die Grundaufgabe der zwischen den beiden Schwungradteilen (Primärschwungradteil und Sekundärschwungradteil) angeordneten Federungs- und Dämpfungseinrichtung ist es, sowohl im Startbetrieb (Resonanzdurchgang) als auch im überkritischen Fahrbetrieb die Grundfunktion, nämlich den Abbau von Drehschwingungen, zu bewirken.

Die konstruktive Ausbildung und räumliche Anordnung der Federungs- und Dämpfungseinrichtung des Standes der Technik kann den vorgenannten Schriften entnommen werden.

Mit den heute bekannten Ausführungen von geteilten Schwungrädern treten insbesondere bei Fahrzeugen mit Dieselmotor-Direkteinspritzung und Vierzylinder-Motoren unter bestimmten Betriebsbedingungen Startprobleme auf. Diese bestehen darin, daß das geteilte Schwungrad das Hochlaufen des Motors in die Leerlaufdrehzahl verhindert.

Durch die Erfindung soll die Aufgabe gelöst werden, die Gefahr von Anlaufproblemen des Motors im Bereich von Drehzahl 0 bis zur Leerlaufdrehzahl, welche durch Resonanzschwingungen des Schwungrades unterhalb der Leerlaufdrehzahl des Motors entstehen können, zu vermeiden, ohne die Resonanzfrequenz des Schwungrades aus dem unterhalb der Leerlaufdrehzahl liegenden Anlaufdrehzahlbereich herauszuverlegen.

Diese Aufgabe wird gemäß der Erfindung durch die kennzeichnenden Merkmale von Anspruch 1 gelöst.

Weitere Merkmale der Erfindung sind in den Unteransprüchen enthalten.

Die Erfindung wird im folgenden mit Bezug auf die Zeichnungen anhand von bevorzugten Ausführungsformen als Beispiele beschrieben. In den Zeichnungen zeigen
- Fig.1: eine schematisierte Darstellung eines geteilten Schwungrades gemäß der Erfindung,
- Fig.2: ein Diagramm der zwischen den Schwungradteilen des geteilten Schwungrades von Fig.1 wirkenden Drehmomente (M) in Abhängigkeit von der relativen Winkelverdrehung (α in Winkelgraden) der Schwungradteile gegeneinander,
- Fig.3: eine schematisierte Darstellung einer abgewandelten Ausführungsform des Schwungrades von Fig. 1,
- Fig.4: ein Diagramm der zwischen den Schwungradteilen des geteilten Schwungrades von Fig.3 wirkenden Drehmomente (M) in Abhängigkeit von der relativen Winkelverdrehung (α in Winkelgraden) der Schwungradteile gegeneinander,
- Fig.5: eine schematisierte Darstellung einer weiteren Ausführungsform eines geteilten Schwungrades gemäß der Erfindung,
- Fig.6: ein Diagramm der zwischen den Schwungradteilen des geteilten Schwungrades von Fig.5 wirkenden Drehmomente (M) in Abhängigkeit von der relativen Winkelverdrehung (α in Winkelgraden) der Schwungradteile gegeneinander,
- Fig.7: eine schematisierte Darstellung einer von Fig.5 abgewandelten Ausführungsform eines geteilten Schwungrades nach der Erfindung,
- Fig.8: ein Diagramm der zwischen den Schwungradteilen des geteilten Schwungrades von Fig.7 wirkenden Drehmomente (M) in Abhängigkeit von der relativen Winkelverdrehung (α in Winkelgraden) der Schwungradteile gegeneinander,
- Fig.9: eine schematisierte Ansicht auf den Außenumfang eines geteilten Schwungrades nach den Figuren 1 bis 4,
- Fig.10: ein Kennlinienfeld mit einer asymmetrischen Federkennlinie (Asymmetrie zwischen Zugseite und Druckseite) einer Drehschwingungen dämpfenden Federanordnung, insbesondere einer Federanordnung nach den Figuren 1 bis 9.

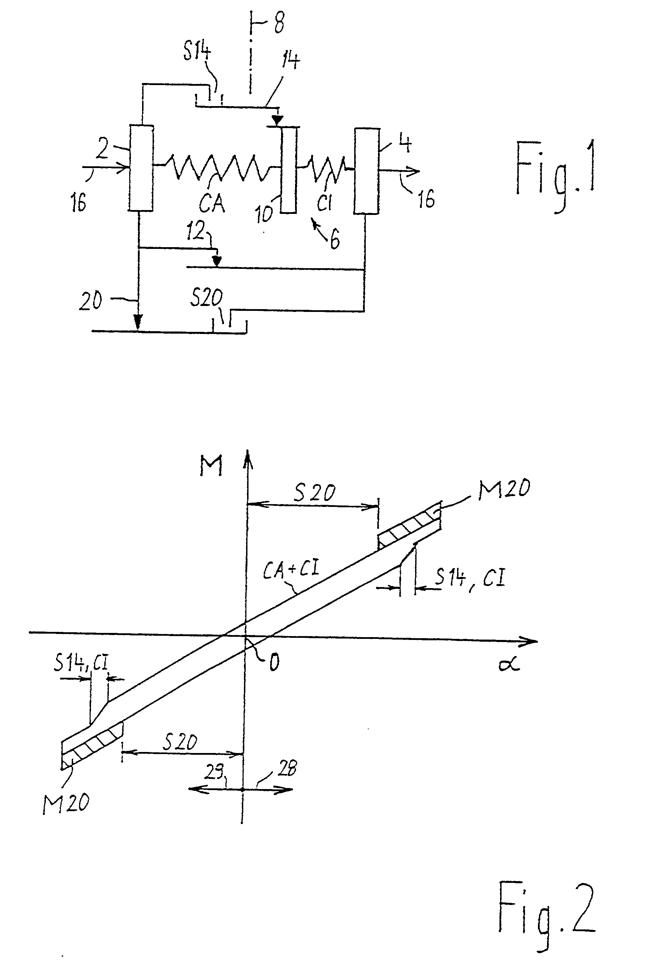

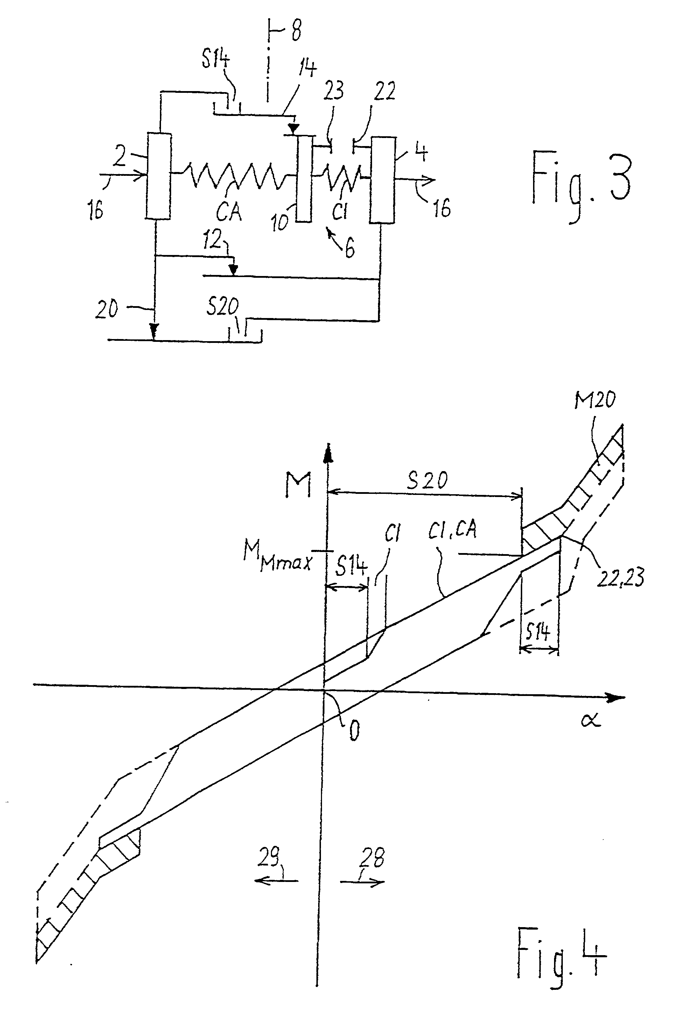

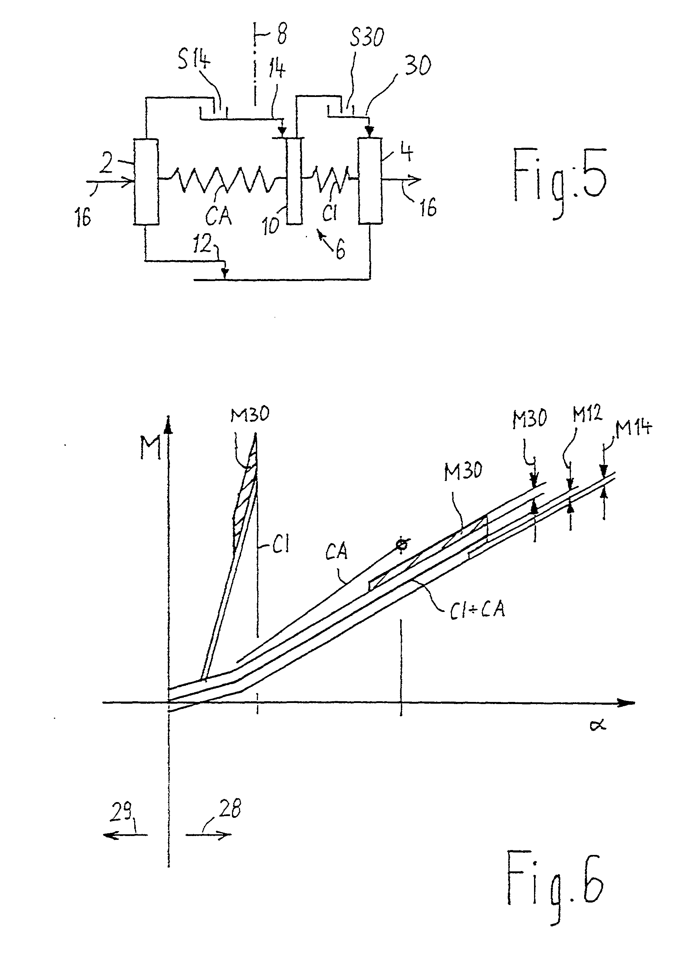

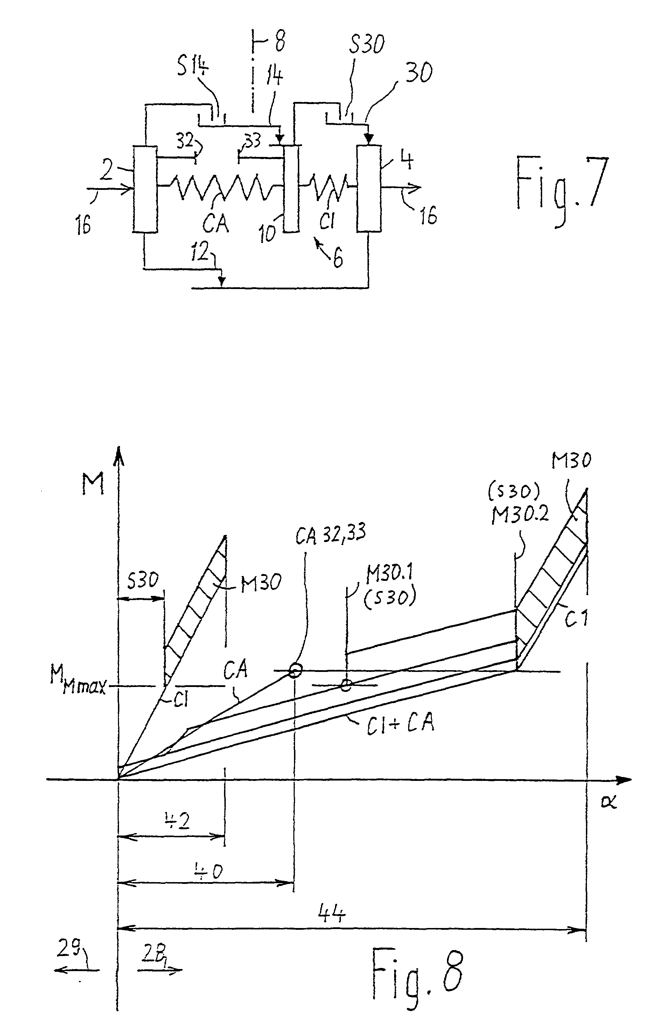

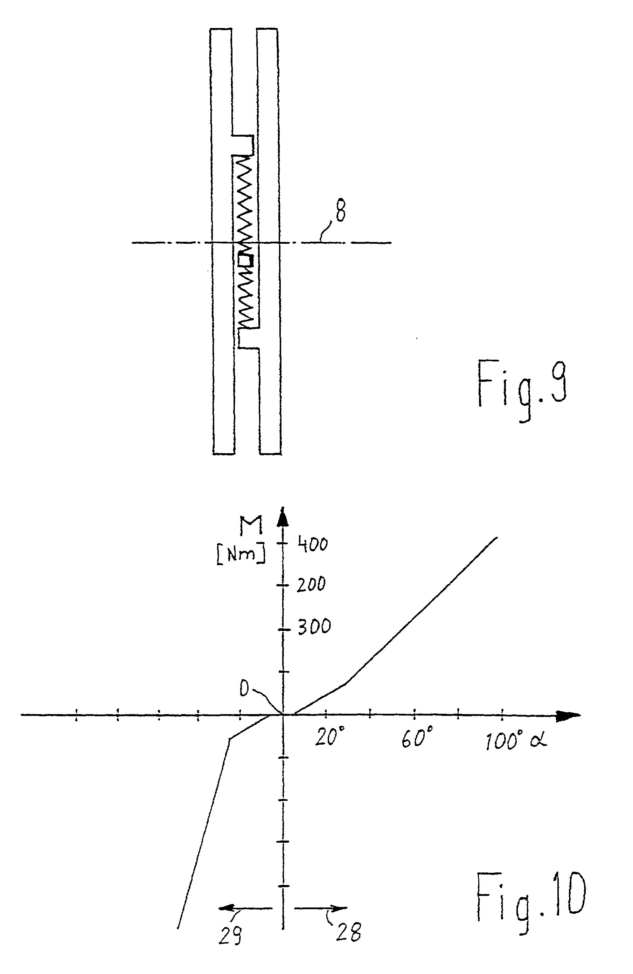

Fig.1 zeigt schematisch eine spielabhängig wirkende Endanschlagdämpfung eines geteilten Schwungrades. Um im Resonanzzustand (große Verdrehwinkel zwischen den beiden Schwungradteilen) durch eine zusätzliche Dämpfung einen Schwingungsabbau zu bewirken, ist gemäß der Erfindung eine zusätzliche Dämpfungseinrichtung vorgesehen, welche nur im Endanschlagbereich der Drehbewegungsstrecke wirkt, um welche die Schwungradteile relativ zueinander verdrehbar sind.

Fig.1 zeigt schematisiert ein an einen Motor anschließbares Primärschwungradteil 2 und ein an einen Fahrzeug-Antriebsstrang anschließbaren Sekundärschwungradteil 4 eines geteilten Schwungrades, welche um eine gemeinsame Rotationsachse 6 relativ zu einander verdrehbar sind entgegen der Federkraft einer Federdämpfungseinrichtung 6, welche mit Vorspannung in Umfangsrichtung um die Rotationsachse 6 zwischen die Schwungradteile 2 und 4 gespannt ist. Die Federdämpfungseinrichtung 6 besteht aus einer Vielzahl von Federdämpfungsgruppen, welche um die Rotationsachse 6 herum verteilt angeordnet sind und von welchen in Fig.1 nur eine dargestellt ist.

Eine solche Federdämpfungsgruppe besteht je aus einer primärseitigen Feder CA und einer sekundärseitigen Feder CI, welche wirkungsmäßig in Reihenschaltung hintereinander angeordnet sind und zwischen die beiden Schwungradteile 2 und 4 mit Vorspannung eingespannt sind, wobei sie gegeneinander über eine Zwischenmasse 10 abgestützt sind, welche in Umfangsrichtung um die Rotationsachse 8 schwimmend angeordnet ist. Die Federn CA und CI sind vorzugsweise Schraubenfedern.

Durch diese Reihenschaltung CA, 10, CI der Federdämpfungsgruppen können ihre Federn CA und CI konstruktiv auf zwei oder mehr radialen Ebenen um die Rotationsachse 8 herum auf kleinem Raum angeordnet werden, um die erforderliche Federkennlinie zu erzeugen.

Im Schwungrad ist eine konstant wirkende, vom Verdrehweg abhängige Grundreibung 12 vorhanden, welche schematisch durch eine Reibungsdämpfungsvorrichtung 12 dargestellt ist. Diese Reibungsdämpfungsvorrichtung 12 verbindet parallel zur Federdämpfungseinrichtung 6 die beiden Schwungradteile 2 und 4 miteinander und ist bei jeder Relativbewegung zwischen diesen beiden Schwungradteilen wirksam. Diese Grundreibung 12 kann durch die in jeder mechanischen Vorrichtung vorhandenen Reibwiderstände gegeben sein oder durch eine zusätzliche Reibungsdämpfungsvorrichtung verstärkt werden.

Ferner ist zwischen dem Primärschwungradteil 2 und der Zwischenmasse 10 parallel zur primärseitigen Feder CA eine primärseitige Reibungsdämpfungsvorrichtung 14 vorgesehen, welche mindestens in Zugrichtung 16 einen freien Drehwinkel-Bewegungsspielraum S14 um die Rotationsachse 8 aufweist, so daß sie mindestens in Zugrichtung 16, vorzugsweise aber auch in entgegengesetzter Schubrichtung, jeweils erst nach Überfahren des Drehwinkel-Bewegungsspieles S14 aktiviert wird.

Eine zusätzliche Dämpfungsvorrichtung, vorzugsweise in Form einer Reibungsdämpfungsvorrichtung 20, verbindet in Umfangsrichtung um die Rotationsachse 8 die beiden Schwungradteile 2 und 4. Sie wirkt aber nur im Endanschlagbereich der Federdämpfungseinrichtung 6 bzw. deren Federn CA und CI, weil sie mit einem freien Drehwinkel-Bewegungsspielraum S20 versehen ist und dadurch jeweils nur im Endanschlagbereich eine Dämpfungswirkung erzeugt. Funktionsmäßig liegt der Dämpfungseinsatz dieser zusätzlichen Dämpfungsvorrichtung 20 über dem maximalen Drehmoment des Motors. Das freie Bewegungsspiel S20 ist vorzugsweise sowohl in Zugrichtung 16 als auch in der entgegengeseetzten Schubrichtung vorhanden.

Motorschwingungen und damit auch die Schwingungen der beiden Schwungradteile 2 und 4 relativ zueinander bewegen sich bei normalem Motorbetrieb nur innerhalb des Bewegungsspieles S14. Die primärseitige Reibungsdämpfungsvorrichtung 14 wird nur aktiv, wenn bei größeren Relativschwingungen nach einem vorbestimmten Federweg der primärseitigen Feder CA der Bewegungsspielraum S14 aufgebraucht ist. Die primärseitige Feder CA verhindert, daß das Reibmoment der primärseitigen Reibungsdämpfungsvorrichtung 14 schlagartig einsetzt.

Wenn die motorseitigen Drehschwingungen im Resonanzbereich des Schwungrades liegen, besteht die Gefahr, daß die sekundärseitige Feder CI auf "Block" geht, d.h., daß ihre schraubenförmigen Federwindungen aneinander zur Anlage kommen. Dies führt nicht nur zu unerwünschten Geräuschen, sondern auch zur Gefahr, daß die sekundärseitige Feder CI zerstört wird. Dieses Problem könnte theoretisch dadurch gelöst werden, daß man die Reibung der Grund-Reibungsdämpfungsvorrichtung 12 erhöht. Dies hätte jedoch den Nachteil, daß ein "Brummen" im Antriebsstrang auftreten kann und die Gefahr besteht, daß der Motor wegen der starken Dämpfung nicht bis zur Leerlaufdrehzahl hochfahren kann.

Zur Lösung dieses Problems wird vorgeschlagen, die zusätzliche Dämpfungsvorrichtung 20 vorzusehen und deren freies Bewegungsspiel S20 so groß zu machen, daß es erst dann aufgebraucht ist, wenn das Drehmoment über dem maximalen Drehmoment des Motors liegt.

Das Diagramm von Fig.2 zeigt das von dem Schwungrad von Fig.1 übertragbare Drehmoment M" in Abhängigkeit vom Verdrehwinkel α zwischen den beiden Schwungradteilen 2 und 4. Die im Diagramm mit M20 gezeichneten Flächen entsprechen dem von der zusätzlichen Dämpfungsvorrichtung 20 nach Aufbrauch ihres Bewegungsspiel S20 zusätzlich zur Federdämpfungseinrichtung erzeugten Drehmoment. Rechts von der vertikalen Drehmonentlinie M liegt die Zug-Seite 28, links davon die Schub-Seite 29.

Fig.3 zeigt schematisch das gleiche geteilte Schwungrad wie Fig.1, jedoch ergänzt durch eine sekundärseitige Anschlagvorrichtung mit Anschlägen 22 und 23, von welchen einer am Sekundärschwungradteil 4 und der andere an der von den Federn CA und CI frei schwimmend gehaltenen Zwischenmasse 10 angeordnet ist. Die sekundärseitige Anschlagvorrichtung 22, 23 begrenzt den Mindestabstand zwischen dem Sekundärschwungradteil 4 und der Zwischenmasse 10 so, daß die sekundärseitige Feder CI nicht auf Block gehen kann. Dadurch wird eine Zerstörung der sekundärseitigen Feder CI im Resonanzfalle verhindert. Das Zusammenschlagen der Anschläge 22 und 23 wird jedoch, wenn dies ungedämpft erfolgen könnte, zu Schlaggeräuschen führen. Ferner kann damit nicht verhindert werden, daß die primärseitige Feder CA im Resonanzfall auf Block geht. Die parallel zur sekundärseitigen Feder CI angeordnete Anschlagvorrichtung 22, 23 geht jeweils knapp oberhalb des maximalen Motordrehmoments auf Anschlag. Sobald die Anschläge 22 und 23 auf Anschlag gehen, oder vorzugsweise kurz vorher, ist das Bewegungsspiel S20 der zusätzlichen Reibungs-Dämpfungsvorrichtung 20 aufgebraucht, und zwar außerhalb des maximal möglichen Motor-Drehmoments im Zugbetrieb (Zugrichtung 16). Im Schubbetrieb (entgegengesetzt zur Zugrichtung 16) ist das maximale Motor-Drehmoment immer kleiner als im Zugbetrieb.

Die Dämpfung der zusätzlichen Dämpfungsvorrichtung 20 kommt zeitmäßig immer zur Wirkung, bevor eine der Federn CA und/oder CI auf Block geht oder deren Anschläge 22,23 zum Anschlag kommen.

Fig.4 zeigt ein Diagramm mit den im Schwungrad zwischen seinen beiden Schwungradteilen bei einer Relativbewegung zwischen ihnen erzeugten Drehmomenten M in Abhängigkeit von dem Verdrehwinkel α zwischen ihnen.

In dem Diagramm von Fig. 4 bedeuten:
M₁₂ die Grundreibung im Schwungrad, welche in Fig. 3 schematisch durch eine Reibungsdämpfungsvorrichtung 12 dargestellt ist;
M_{Mmax} das maximale Motordrehmoment im Zugbetrieb;
der Punkt 22, 23 die Stelle, bei welcher die Anschläge 22, 23 aneinander zum Anliegen kommen und dadurch die Annäherung zwischen dem Sekundärschwungradteil 4 und der Zwischenmasse 10 begrenzen;
S20 das Verdrehwinkel-Bewegungsspiel, nach welchem die Dämpfungswirkung der Dämpfungsvorrichtung 20 einsetzt;
der schraffierte Bereich M20 das Dämpfungsmoment der zusätzlichen Dämpfungsvorrichtung 20;
die gestrichelte Linie den Momentenverlauf, wenn die Anschläge 22, 23 gegeneinander anliegen, die primärseitige Feder CA weiter gespannt wird und nur noch die primärseitige Feder CA dämpfend wirkt, weil die sekundärseitige Feder CI durch die aneinander anliegenden Anschläge 22, 23 an einer weiteren Kompression gehindert wird.

Bei allen bereits beschriebenen und nachstehend noch zu beschriebenden Ausführungsformen sind in bevorzugter praktischer Ausführungsform die primärseitigen Federn CA auf einer radial weiter außen gelegenen Ebene und die sekundärseitigen Federn CI auf einer radial weiter innen gelegenen Ebene angeordnet.

Bei der in Fig.5 dargestellten weiteren Ausführungsform nach der Erfindung sind gleiche Teile wie in den Figuren 1 bis 4 mit gleichen Bezeichnungen oder gleichen Bezugszahlen versehen. Diese gleichen Teile werden nachfolgend nicht nochmals beschrieben.

Bei der Ausführungsform nach Fig.5 ist die zusätzliche Dämpfungsvorrichtung 20 vorhanden, wurde jedoch in Fig.5 weggelassen.

Bei der Ausführungsform nach Fig. 5 ist eine separate Dämpfungsvorrichtung, vorzugsweise eine Reibungs-Dämpfungsvorrichtung 30 für die sekundärseitigen Federn CI vorgesehen. Diese separate sekundärseitige Dämpfungsvorrichtung 30 ist zwischen die Zwischenmasse 10 und das Sekundärschwungradteil 4 parallel zu der mindestens einen sekundärseitigen Feder CI eingebaut. Sie kann die gleiche Dämpfungswirkung erzeugen (oder gemäß anderer Ausführungsform eine andere Dämpfungswirkung) wie die primärseitige Dämpfungsvorrichtung 14. Hierdurch wird die Dämpfungswirkung bei großen Winkelausschlägen α relativ zu den anderen Winkelbereichen vergrößert, ohne daß die Grundwirkung des Schwungrades im Lastbetrieb beeinträchtigt wird. Die sekundäre Dämpfungsvorrichtung 30 hat ein freies Drehwinkel-Bewegungsspiel S30, durch welche ihre Dämpfung 30 jeweils erst im Endbereich einer vorbestimmten Federstrecke der sekundären Feder CI wirksam wird, kurz bevor diese sekundäre Feder CI auf Block gehen kann (bevor ihre schraubenförmigen Windungen gegeneinander zur Anlage kommen).

Das Diagramm von Fig. 6 zeigt die Drehmomente "M" in dem Schwungrad in Abhängigkeit von dem Verdrehwinkel α zwischen den Schwungradteilen 2 und 4 auf der Zugseite 28. Auf der Schubseite 29 ergibt sich eine spiegelbildliche Darstellung, welche nicht gezeigt ist.

In Fig.6 sind die Dämpfungsmomente der betreffenden Teile von Fig. 5 mit den Bezugszahlen oder Bezugszeichen dieser Teile versehen.

Fig. 7 zeigt die gleiche Ausführungsform wie Fig.5, jedoch ergänzt durch Anschläge 32 und 33 einer parallel zu den primärseitigen Federn CA angeordneten Anschlagvorrichtung zur Begrenzung der Kompressionsstrecke dieser primärseitigen Federn CA so, daß sie nicht auf Block gehen können.

Fig. 8 zeigt ein Diagramm mit den Drehmomenten "M" zwischen den Schwungradteilen 2 und 4 in Abhängigkeit von dem relativen Verdrehwinkel α zwichen diesen beiden Schwungradteilen. In Fig. 8 sind die Bezugszahlen der Bezugszeichen der zugehörigen Teile von Fig. 7 angegeben und es bedeuten:
M_{Mmax} das maximale Motordrehmoment;
die schraffierte Fläche M30 das zusätzliche Dämpfungsmoment der sekundärseitigen Dämpfungsvorrichtung 30 in den Federstrecken-Endbereichen der sekundärseitigen Federn CI;
die Ziffern 32, 33 der Punkt, bei welchem die Anschläge 32 und 33 der primärseitigen Anschlagvorrichtung 32, 33 aneinander anschlagen und dadurch den Kompressionsweg der primärseitigen Federn CA begrenzen;
M30.1 der früheste Zeitpunkt, bei welchem die sekundärseitige Dämpfungsvorrichtung 30 wirksam werden soll;
M30.2 der späteste Zeitpunkt, bei welchem die sekundärseitige Dämpfungsvorrichtung 30 wirksam werden soll;
CA das von den primärseitigen Federn CA erzeugte Drehmoment;
CI das von den sekundärseitigen Federn CI erzeugte Drehmoment;
ein Doppelpfeil 40 den Verdrehwinkel zwischen dem Primärschwungradteil 2 und der Zwischenmasse 10;
ein Doppelpfeil 42 die Drehmomentsituation nur zwischen dem Sekundärschwungradteil 4 und der Zwischenmasse 10 betrachtet;
ein Doppelpfeil 44 die Drehomomentsituation im gesamten Verdrehwinkelbereich zwischen den beiden Schwungradteilen 2 und 4 betrachtet.

Bei allen vorstehend beschriebenen Ausführungsformen der Figuren 1 bis 8 werden die beiden Schwungradteile 2 und 4 von den Federn CA und CI in die dargestellten Neutralpositionen entsprechend einem Verdrehwinkel α=0 gedrängt.

Fig.9 zeigt schematisch für alle Ausführungsformen eine Seitenansicht des Schwungrades mit den beiden Schwungradteilen 2 und 4 und der Zwischenmasse 10 zwischen je einer der Federn CA und CI. Es ist mindestens je eine der Federn CA und CI erforderlich. In der Praxis wird man jedoch eine Vielzahl solcher Federn verwenden und die sekundärseitigen Federn CI, welche vorzugsweise kleiner sind als die primärseitigen Federn CA, auf einem Kreis radial innerhalb der primärseitigen Federn CA um die Rotationsachse 8 herum anordnen.

Gemäß einem von den beschriebenen Ausführungsformen unabhängigen, jedoch auch in Kombination in diesen Ausführungsformen verwendbaren Gedanken hat die Federdämpfungseinrichtung 6 eine asymmetrische Federkennlinie.

Die Feder-Grundkennlinie des Schwungrades ist so ausgelegt, daß die Resonanzfrequenz weniger als 10 Hz beträgt, um
a) den Abkoppelgrad im Fahrbetrieb möglichst hoch zu haben und
b) damit beim Starten im Anlasserbetrieb die Resonanz durchfahren wird.

Durch den heute auch aus Gründen eines optimalen Fahrbetriebes festgelegten symmetrischen Verlauf der Federn CA und CI (gleiche Steigung und Federrate oder Federsteifigkeit für die Zugseite und die Schubseite) wird in der Resonanz der Schwingungszustand des mehrteiligen Schwungrades verstärkt. Es wird vorgeschlagen, eine asymmetrische Ausführung der Federkennlinie der Federdämpfungseinrichtung 6 vorzusehen, um den Resonanzzustand zu stören, d.h. um die Schwingungsamplituden zu limitieren. Da im Fahrbetrieb die Zug-Seite funktionstechnisch so bleiben muß wie sie heute ausgeführt wird, kann lediglich durch eine Anhebung der schubseitigen Federrate oder Federsteifigkeit, beispielsweise um mehr als 50 Prozent wie die Zugseite, das Anfachen der Resonanzschwingung begrenzt werden und somit ein funktionsmäßig normaler Startvorgang gewährleistet werden.

Fig.10 zeigt eine solche asymmetrische Federkennlinie der Federdämpfungseinrichtung 6. Auf der einen Achse des Diagrammes von Fig. 10 sind die Verdrehwinkel α zwichen den Schwungradteilen 2 und 4, und auf der anderen Diagrammachse die Drehmomente der Federdämpfungseinrichtung 6 in Nm angegeben.

## Patentansprüche

1. Anordnung eines Geteilten Schwungrades zur Verringerung von motorseitig erregten Schwingungen eines Antriebsstranges, enthaltend:
a) zwei gleichachsig angeordnete, um eine gemeinsame Drehachse relativ zueinander um eine begrenzte Winkelstrecke verdrehbare Schwungradteile (2, 4), deren eines, im folgenden als Primärschwungradteil (2) bezeichnet, mit dem Motor und deren anderes, im folgenden als Sekundärschwungradteil (4) bezeichnetes, mit dem Antriebsstrang antriebsmäßig verbunden oder verbindbar ist,
b) eine zwischen den Schwungradteilen angeordnete, ihren relativen Winkelbewegungen entgegenwirkende Federanordnung (6), wobei die Federanordnung (6) mindestens einmal eine Zwischenmasse (10) aufweist, welche zwischen zwei Federeinheiten (CI, CA) angeordnet ist, von welchen das von der Zwischenmasse abgewandte Ende der einen Federeinheit (CA) mit dem Primärschwungradteil (2) und das von der Zwischenmasse abgewandte Ende der anderen Federeinheit (CI) mit dem Sekundärschwungradteil (4) funktionsmäßig verbunden ist,
c) eine erste Dämpfungsvorrichtung (14), welche die Zwischenmasse (10) und das Primärschwungradteil (2) mit einem freien Bewegungsspiel (S14) derart miteinander funktionsmäßig verbindet, dass diese Dämpfungsvorrichtung (14) parallel zu der Federeinheit (CA), welche zwischen der Zwischenmasse (10) mit dem Primärschwungradteil (2) angeordnet ist, jeweils nur nach Überwindung des Bewegungsspieles (S14) unter gleichzeitiger Beaufschlagung der Federeinheit (CA) wirkt,
d) eine zweite Dämpfungsvorrichtung (20), welche die beiden Schwungradteile (2, 4) funktionsmäßig miteinander verbindet, wobei die zweite Dämpfungsvorrichtung (20) soviel freies Bewegungsspiel (S20) hat, dass sie nur in den beiden Endbereichen der relativen Verdrehwinkelstrecke der beiden Schwungradteile (2, 4) eine dämpfende Wirkung hat, **dadurch gekennzeichnet, dass** dieses freie Bewegungsspiel (S20) der zweiten Dämpfungsvorrichtung (20) so groß ist, dass es erst dann aufgebraucht ist, wenn das Drehmoment über dem maximalen Drehmoment des Motors liegt.

2. Anordnung nach Anspruch 1,
**dadurch gekennzeichnet, dass**
die Zwischenmasse (10) und das Sekundärschwungradteil (4) durch eine derart mit dem Bewegungsspiel (S30) behaftete Dämpfungsvorrichtung (30) miteinander funktionsmäßig verbunden sind, dass die Dämpfungseinrichtung (30) zusätzlich zu der Federeinheit, welche ebenfalls die Zwischenmasse (10) mit dem Sekundärschwungradteil (4) verbindet, jeweils nur in den Endbereichen der Federwegstrecke dieser Federeinheit (CI) wirkt.

3. Anordnung nach Anspruch 1 oder 2 ,
**dadurch gekennzeichnet, dass**
die Dämpfungselemente der Dämpfungseinrichtung Reibflächendämpfer aufweisen.

4. Anordnung nach einem der Ansprüche 1 bis 3,
**dadurch gekennzeichnet, dass**
die Federanordnung in der einen Belastungseinrichtung eine wesentlich andere Federcharakteristik, insbesondere eine andere Federrate oder Federsteifigkeit, hat als in der anderen Belastungsrichtung.

## Claims

1. Arrangement of a split flywheel for the reduction of vibrations of a drive train caused by the engine, comprising:
a) two flywheel parts (2, 4) arranged coaxially and rotatable relative to one another along a limited angular path about a common pivot, of which one - hereinafter referred to a primary flywheel part (2) - is connected or connectable for drive to the engine and the other - hereinafter referred to as secondary flywheel part (4) - is connected or connectable for drive to the drive train,
b) a spring assembly (6) located between the flywheel parts and counteracting their relative angular movement, said spring assembly (6) being at least one provided with an intermediate mass (10) located between two spring units (CI, CA), of which the end of the one spring unit (CA) remote from the intermediate mass is functionally connected to the primary flywheel part (2) and the end of the other spring unit (CI) remote from the intermediate mass is functionally connected to the secondary flywheel part (4),
c) a first damping device (14) functionally connecting the intermediate mass and the primary flywheel part (2) to one another with free play (S14), so that said damping device (14) only acts parallel to the spring unit (CA) located between the intermediate mass (10) and the primary flywheel part (2) after the play (S14) has been overcome while the spring unit (CA) is simultaneously pressurised,
d) a second damping device (20) functionally connecting the two flywheel parts (2, 4) to one another, the second damping device (20) having so much free play (S20) that its damping action is limited to the two end regions of the relative angular path of the two flywheel parts (2, 4),
**characterised in that**
this free play (S20) of the second damping device (20) is so large that it is used up only if the torque exceeds the maximum torque of the engine.

2. Arrangement according to claim 1,
**characterised in that**
the intermediate mass (10) and the secondary flywheel part (4) are functionally connected to one another by a damping device (30) with the free play (S30), so that the damping device (30), in addition to the spring unit likewise connecting the intermediate mass (10) to the secondary flywheel part (4), only acts in the end regions of the spring deflection path of the spring unit (CI).

3. Arrangement according to claim 1 or 2,
**characterised in that**
the damping elements of the damping device are provided with friction surface dampers.

4. Arrangement according to any of claims 1 to 3,
**characterised in that**
the spring assembly has substantially different spring characteristics, in particular a substantially different spring rate or spring rigidity values, in the two loading directions.

## Revendications

1. Agencement d'un volant divisé destiné à réduire les oscillations d'une chaîne cinématique générées côté moteur, comprenant :
a) deux parties de volant (2, 4) disposées sur le même axe, rotatives l'une par rapport à l'autre autour d'un axe de rotation commun sur une trajectoire angulaire limitée, dont l'une, désignée dans ce qui suit en tant que partie de volant primaire (2), est reliée ou peut être reliée de façon entraînée au moteur tandis que l'autre, désignée dans ce qui suit en tant que partie de volant secondaire (4), est reliée ou peut être reliée de façon entraînée à la chaîne cinématique,
b) un ensemble de ressorts (6) disposé entre les parties de volant, agissant à l'encontre de leurs mouvements angulaires relatifs, l'ensemble de ressorts (6) présentant au moins à une reprise une masse intermédiaire (10) disposée entre deux unités formant ressort (CI, CA), parmi lesquelles l'extrémité de la première unité formant ressort (CA) opposée à la masse intermédiaire est reliée de façon fonctionnelle à la partie de volant primaire (2) tandis que l'extrémité de l'autre unité formant ressort (CI) opposée à la masse intermédiaire est reliée de façon fonctionnelle à la partie de volant secondaire (4),
c) un premier dispositif d'amortissement (14) qui relie entre elles de façon fonctionnelle la masse intermédiaire (10) et la partie de volant primaire (2) avec un jeu de mouvement libre (S14), de telle sorte que ce dispositif d'amortissement (14) agit parallèlement à l'unité formant ressort (CA), qui est disposée entre la masse intermédiaire (10) et la partie de volant primaire (2), respectivement seulement après avoir pallié au jeu de mouvement (S14) en sollicitant simultanément l'unité formant ressort (CA),
d) un deuxième dispositif d'amortissement (20), qui relie entre elles de façon fonctionnelle les deux parties de volant (2, 4), le deuxième dispositif d'amortissement (20) possédant un jeu de mouvement libre si important (S20) qu'il n'exerce une action amortissante que dans les deux zones d'extrémité des trajectoires angulaires de rotation relatives des deux parties de volant (2, 4), **caractérisé en ce que** ce jeu de mouvement libre (S20) du deuxième dispositif d'amortissement (20) est si important qu'il n'est appliqué que lorsque le couple est supérieur au couple maximal du moteur.

2. Agencement selon la revendication 1, **caractérisé en ce que** la masse intermédiaire (10) et la partie de volant secondaire (4) sont reliées entre elles de façon fonctionnelle par le biais d'un dispositif d'amortissement (30) présentant le jeu de mouvement (S30), de telle sorte que le dispositif d'amortissement (30), en plus de l'unité formant ressort, qui relie également la masse intermédiaire (10) à la partie de volant secondaire (4), agit respectivement seulement dans les zones d'extrémité de la trajectoire de débattement de cette unité formant ressort (CI).

3. Agencement selon la revendication 1 ou 2, **caractérisé en ce que**
les éléments d'amortissement du dispositif d'amortissement présentent des amortisseurs à surface de frottement.

4. Agencement selon l'une quelconque des revendications 1 à 3, **caractérisé en ce que** l'ensemble de ressorts possède, dans la première direction de sollicitation, une caractéristique de ressort, en particulier une constante de rappel ou une rigidité de ressort, très différente de celle observée dans l'autre direction de sollicitation.
